# EUROPEAN PATENT SPECIFICATION

(11) **EP 2 164 200 B1**
(45) Date of publication and mention of the grant of the patent: **03.01.2018**
(21) Application number: 08290862.5
(22) Date of filing: 15.09.2008
(51) Int. Cl.: H04L 1/00, H04W 88/18

(54) **Speech rate control signalling and method thereof**
Sprachgeschwindigkeits-Steuersignalisierung und Verfahren dafür
Signalisation de commande de vitesse vocale et procédé correspondant

(43) Date of publication of application: 17.03.2010
(73) Proprietor: ALCATEL LUCENT, 92100 Boulogne-Billancourt (FR)
(72) Inventor: Klein, Stefan, 91056 Erlangen (DE); Luton, Gregoire, 75015 Paris (FR)
(74) Representative: Wetzel, Emmanuelle

(56) References cited:
- EP-A- 0 986 206
- EP-A- 1 085 687
- US-A1- 2004 267 519
- US-A1- 2005 169 391
- US-B2- 7 193 966

## Description

### of the invention

The invention relates to a method of providing a reduction of the speech rate control signaling in a mobile communication network, to a network element and to a computer program product.

### Background and related art

The adaptive multi-rate (AMR) is an audio data compression scheme adopted as the standard speech codec by 3GPP and used in both GSM and UMTS systems. It uses link adaptation to select from one of eight different bit rates based on the link conditions. The frames of the compression scheme contain 160 samples and are 20 milliseconds long. The adaptive multi-rate may use different techniques, such as Algebraic Code Excited Linear Prediction, discontinuous transmission, voice activity detection and comfort noise generation. The usage of adaptive multi-rate requires optimized link adaptation that selects the best codec mode to meet the local radio channel and capacity requirements.

Documents US7193966, US2005/0169391, and EP1085687 disclose various rate control methods known in the art.

### Summary of the Invention

The invention provides a method of providing a reduction of speech rate control signalling in a network element of a mobile communications network, a network element and a computer program product as claimed in the independent claims. Embodiments of the invention are given in the dependent claims.

The embodiments allow avoiding an overload of the network by continuously transmitting control messages with command for changing the speech codec rates in a mobile station. The embodiments allow to give the highest priority only to control requests with commands to lower the speech codec rate, and therefore improving the quality of the speech by making the transmission stronger against block errors.

The embodiments separate the other control requests in a time span, puts on hold the subsequent rate control request, or ignoring them in certain circumstances.

### Brief description of the drawings

In the following preferred embodiments of the invention will be described in greater detail by way of example only making reference to the drawings in which:
- Figure 1: shows an example of a mobile communication system,
- Figure 2: shows a graphic representing the speech rate control signaling,
- Figure 3: shows a flowchart of a method according to the embodiments.
- Figure 4: shows another flowchart of a method according to the embodiments.

### Detailed description

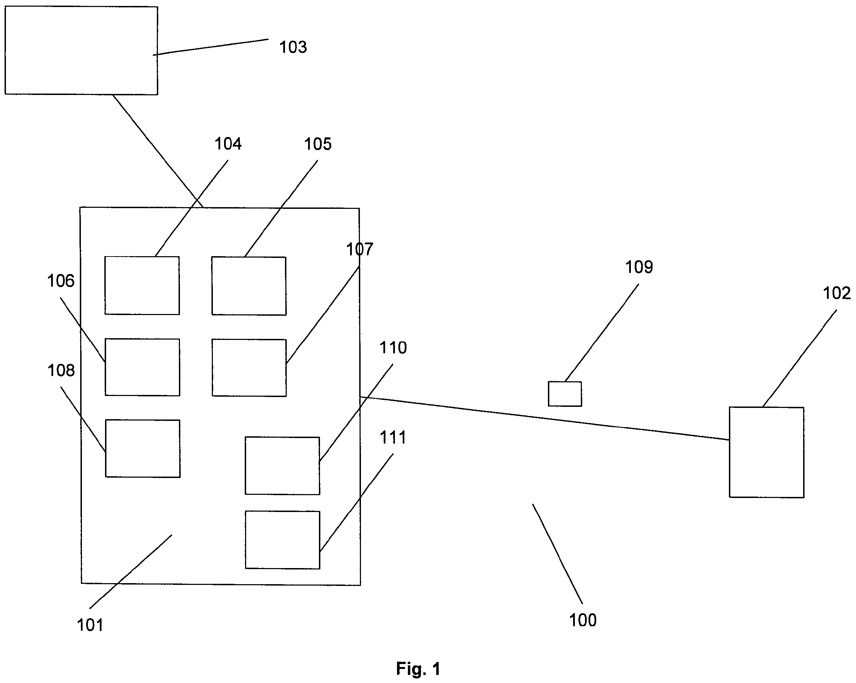

Fig. 1 shows a mobile communication network 100 comprising network element 101 coupled to the mobile station 102 and a core network 103 coupled to the network element 101. The network element 101 comprises means for receiving 104 a first rate control request for setting a highest allowed speech codec rate at a first rate; means for sending 105 a first control message to the mobile station 102 for disabling a speech rate higher than the first rate; means for 106 starting a timer with a predetermined ending value; means for 107 receiving a second request for setting the highest allowed speech codec rate at a second rate, wherein the second code rate is higher than the first rate; and means for holding 108 the second rate control request, if a current value of the timer is smaller than the predetermined ending value.

In order to combat block errors, a mobile communication system such as GSM or UMTS, adapts the speech rate codecs to a lower or to a higher rate, according to the conditions of the channel. The lower the speech code rate, the stronger it is against block codes. Otherwise if the channel conditions are good, the speech code rate may be increased, and the quality of the speech is improved. There are two possible ways to transmit the rate control signaling messages from a network element, such as a radio network controller or a base station controller, to a mobile station: using a separated signaling rate bearer used primarily for adaptive multi-rate control purposes, or using a shared signaling radio bearer, which is used also for other signaling procedures.

During a communications call between a remote mobile station and the mobile station 102, the core network 103 may not include transcoders that adjust the AMR codec rate, in a so called transcoder free operation. In these situations, the network element 101 continuously received rate control requests, also called rate control commands, to change the downlink rate of the radio link that connects the mobile station 102. After the reception of a first rate control request that commands to set the highest allowed speech codec rate at a first rate, the network element 101 sends a first control message 109 to the mobile station 102 with the instruction of disabling a speech rate higher than this first rate. Immediately after, a timer 110 at the network element 101 is started, where the timer 110 includes a predetermined ending value.

If the network element 101 receives a second request for setting the highest allowed speech codec rate at the second rate from the core network 103, and if the second rate is higher than the first rate and the timer has not reached its predetermined ending value, the network element 101 holds the second rate control request, until the timer has reached the predetermined ending value, or until further changes or requests in the network 100 occur.

By holding the second rate control request, the network element 101 avoids the mobile communications network 100 to overload the system and the transmission links with control messages to the mobile station, that may reach a scenario where the control messages fully occupy the signaling rate bearers and block other signaling procedures, like for example the handovers. This might result in failures in other signaling procedures or even in a call drop.

The network element 101 may further comprise means for receiving a third request for setting the highest allowed speech codec at a third rate, wherein the third rate is higher than the second rate; means for sending a second control message to the mobile station to disable speech rates higher than the second rate, when the timer reaches the predetermined ending value; means for restarting the timer at the second predetermined value.

The second predetermined ending value may be a different ending value than the predetermined ending value, or it may use a different value that adapts to the requirements or the load of the system 100. The network element 101 further comprises means for holding the third request and the means for sending a third control message to the mobile station in order to disable the speech rates higher than the third rate, when the timer reaches the second predetermined ending value.

In case the network element 101 receives further control requests for setting the highest allowed speech codec at a rate higher than the previously received control request, the network element 101 holds this third request and queues it behind the previous control request and allows a time separation and organization of the control messages that are sent to the mobile station 102, so that the mobile station is not required to continuously switch the AMR rates.

In case that the network element 101 receives a third request for setting the highest allowed speech codec to a third rate that is lower than the second or previous rates that are currently on hold or in use, the network element 101 immediately prepares and sends a third control message to the mobile station in order to disable speech rates higher than the third rate without waiting for the timer to reach the predetermined ending value and overriding the queues of the control request. The speech codec with the lower codec rate allows combating block errors and improve the overall quality of the signal.

In some cases, the network element 101 receives a third control request for setting the speech rate of the third rate and this third rate is equal to the first rate currently in use, and the second control request is on hold. In these cases, the network element 101 ignores the second and the third control request and the first rate continues to be used as the set speech rate codec. The network element 101 may further comprise a computer program product stored on a storage medium, comprising executable program means.

The previously described control request may correspond to lu rate control request triggered from a remote radio link or a core network without transcoders in so called tandem free operations (TFO) or transcoder free operation scenarios (TrFO). A possible control message may correspond to the radio resources control message (RRC) and the mobile communication system may correspond to a GSM or a UMTS mobile communication system.

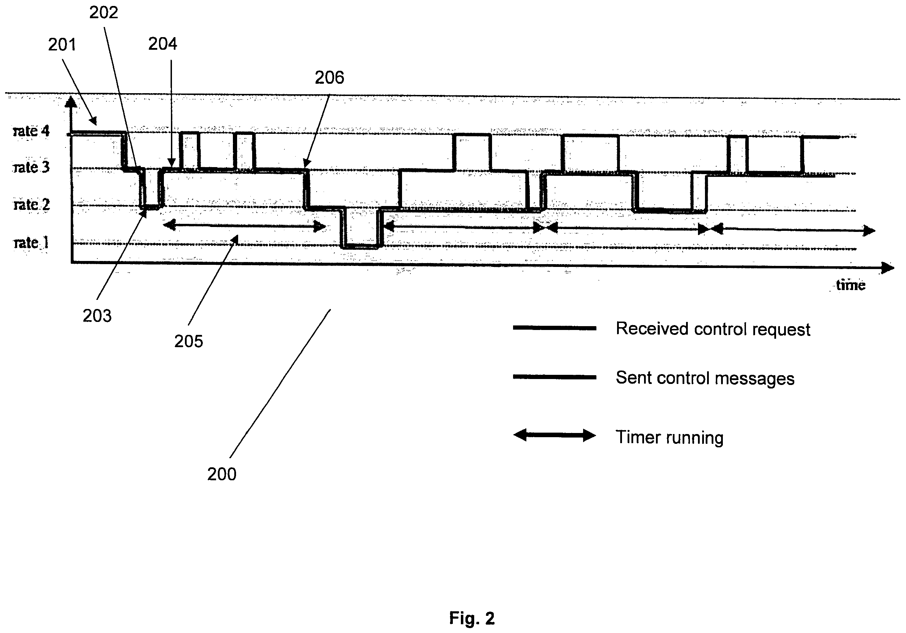

Fig. 2 shows a graphic 200 with a representation of the received control request by the network element in time for setting four different speech codec rates, and the sent control messages represented in the grey lines. The graphics also show the time where the timer is running with a double arrow.

At the start 201 of the graphic 200, the highest speech codec rate is set at the rate 4, which represents the overall highest speech codec rate in the system. After that, a control request is received to lower the highest allowed speech codec rate at a rate number 3, shown in reference 202. A brief time later, a new control request is received in 203, indicating to lower the highest allowed speech rate at rate 2. The corresponding control messages for the requests in 202 and 203 are sent to the mobile station immediately, as the control request indicated a reduction of the speech codec rate as a result of the decrease in the quality of the channel's conditions.

In the reference 204, a new control request is received by the network element to increase the speech codec rate from rate 2 to rate 3. A corresponding control message is sent to the mobile station with the command to increase the highest allowed speech codec rate to rate number 3 and the timer is started with the predetermined ending value shows in 205. Within the time that the timer has not reached the predetermined ending value, four requests are received by the network element indicating to increase the rate 3 to a rate 4 and a corresponding decrease from rate 4 to rate 3.

These four requests are ignored by the network element 101, and the highest allowed speech codec rate is maintained at rate 3, until in reference 206 a new control request is received by the network element requesting to decrease the rate 3 to rate 2 and subsequently to decrease again the rate 2 to a rate 1. These two control requests are immediately confirmed and their corresponding control messages are sent to the mobile station. Only when a new control request is received to increase the currently used speech codec rate, a timer is restarted again and subsequently control requests are kept on hold or ignored until the predetermined value is reached by the timer, if this control request solicits the speech codec rate to increase the current speech codec rate.

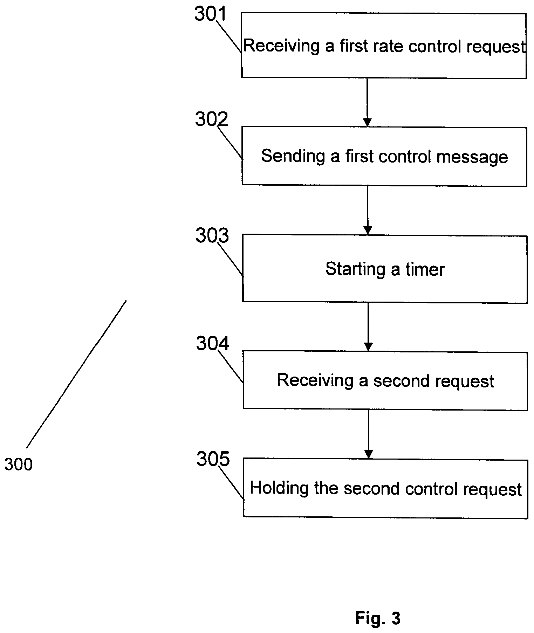

Fig. 3 shows a flowchart 300 representing the method of providing a reduction of speech rate control signaling in a network element of a mobile communications network. The method comprises receiving a first rate control request for setting highest allowed speech codec rate at a first rate from a core network coupled to the network element in a first step 301; sending a first control message to a mobile station coupled to the network element for disabling a speech rate higher than the first rate in a second step 302; starting a timer with predetermined ending value in a third step 303; receiving a second request for setting the highest allowed speech codec rate at the second rate from the core network in a fourth step 304, wherein the second rate is higher than the first rate; holding the second rate control request, if the current value of the timer is smaller than the predetermined ending value in a fifth step 305; and sending a second control message to the mobile station to disable speech rates higher than the second rate in a sixth step 306, when the timer reaches the predetermined ending value.

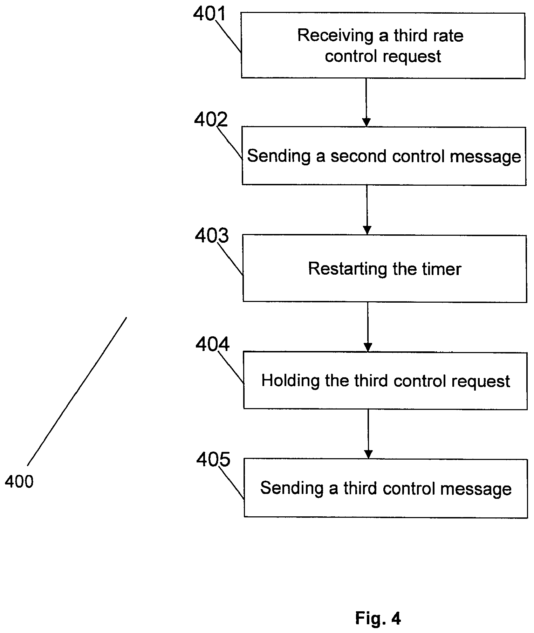

Fig. 4 shows a flowchart 400 representing embodiments of the method of providing a reduction of the speech rate control signaling in the network element of the mobile communication systems. The method comprising receiving a third control request for setting the highest allowed speech codec at a third rate, wherein the third rate is higher than the second rate in a first step 401; sending a second control message to the mobile station to disable speech rates higher than the second rate when the timer reaches the predetermined ending value in a second step 402; restarting the timer at the second predetermined ending value at a third step 403; holding the third request in a fourth step 404 and sending a third control message to the mobile station to disable speech rates higher than the third rate when the timer reaches the second predetermined ending value in a fifth step 405.

**List of reference numerals**

| | |
|---|---|
| 100 | Mobile communications network |
| 101 | Network element |
| 102 | Mobile station |
| 103 | Core network |
| 104 | Means for receiving |
| 105 | Means for sending |
| 106 | Means for starting |
| 107 | Means for receiving |
| 108 | Means for holding |
| 109 | First control message |
| 111 | Computer Program Product |
| 200 | Speech rate control signaling graphic |
| 201 | First request |
| 202 | Second rate control request |
| 203 | Third rate control request |
| 204 | Fourth control request |
| 205 | Ninth control request |
| 300 | Flowchart |
| 301 | First step |
| 302 | Second step |
| 303 | Third step |
| 304 | Fourth step |
| 305 | Fifth step |
| 306 | Sixth step |
| 400 | Flowchart |
| 401 | First step |
| 402 | Second step |
| 403 | Third step |
| 404 | Fourth step |
| 405 | Fifth step |

## Claims

1. A method of providing a reduction of speech rate control signalling in a network element of a mobile communications network according to channel conditions, the method comprising:
- receiving (301) a first rate control request for setting a highest allowed speech codec rate at a first rate from a core network coupled to the network element;
- sending (302) a first control message to a mobile station coupled to said network element for disabling speech rates higher than said first rate;
- starting (303) a timer with a predetermined ending value;
- receiving (304) a second rate control request for setting said highest allowed speech codec rate at a second rate from a core network coupled to the network element; wherein said second rate is higher than said first rate;
- putting (305) said second rate control request on hold, if a current value of said timer is smaller than said predetermined ending value
- receiving a third rate control request for setting said highest allowed speech codec at a third rate, wherein said third rate is lower than said second and said first rate;
- sending a third control message to said mobile station to disable speech rates higher than said third rate without waiting for the timer to reach the predetermined ending value.

2. The method of claim 1 further comprising:
- receiving a third control request for setting said speech rate at a third rate, wherein said third rate is equal to said first rate and said second control request is on hold;
- ignoring said second and third control request.

3. The method of any of the preceding claims, wherein said speech code is AMR or W-AMR; wherein said timer is restarted after sending a control message to said mobile station for enabling said second rate.

4. The method of any of the preceding claims, wherein said current value of said timer is obtained by counting received voice frames.

5. The method of any of the claims 1-3, wherein said current value of said timer is obtained from a system clock.

6. The method of any of the preceding claims, wherein said control requests are lu rate control requests triggered from a remote radio link in a tandem free operation or a transcoder free operation scenario; wherein said control messages are radio resorce control message; wherein said mobile communication system is GSM or UMTS.

7. A network element in a mobile communication system operable to providing a reduction of speech rate control signalling according to channel conditions, comprising:
- means for receiving (104) a first rate control request for setting a highest allowed speech codec rate at a first rate;
- means for sending (105) a first control message (109) to a mobile station coupled to said network element for disabling speech rates higher than said first rate;
- means for starting (106) a timer with a predetermined ending value;
- means for receiving (107) a second rate control request for setting said highest allowed speech codec rate at a second rate; wherein said second rate is higher than said first rate;
- means for putting (108) said second rate control request on hold, if a current value of said timer is smaller than said predetermined ending value
- means for receiving a third request for setting said highest allowed speech codec at a third rate, wherein said third rate is lower than said second and said first rate;
- means for sending a third control message to said mobile station to disable speech rates higher than said third rate.

8. The network element of claim 7 further comprising:
- means for receiving a third rate control request for setting said highest allowed speech codec at a third rate, wherein said third rate is higher than said second rate;
- means for sending a second control message to said mobile station to disable speech rates higher than said second rate, when said timer reaches said predetermined ending value;
- means for restarting said timer at a second predetermined ending value;
- means for holding said third request;
- means for sending a third control message to said mobile station to disable speech rates higher than said third rate, when said timer reaches said second predetermined ending value.

9. The network element of claim 7, further comprising:
- means for receiving a third control request for setting said speech rate at a third rate, wherein said third rate is equal to said first rate and said second control request is on hold;
- means for ignoring said second and third control request.

10. The network element of any of the claims 7 to 9, wherein said speech code is AMR or W-AMR; wherein said timer is restarted after sending a control message to said mobile station for enabling said second rate.

11. The network element of any of the preceding claims, wherein said network element is a base station controller, or a radio network controller, or a base station, or a node B, or an access point.

12. A computer program product (111) stored on a storage medium, comprising executable program means for causing a network element to perform a method according to any of the preceding claims 1 to 7 when the program is run on the core network element.

## Patentansprüche

1. Verfahren zum Bereitstellen einer Reduktion von Sprachratensteuersignalisierung in einem Netzwerkelement eines mobilen Kommunikationsnetzwerks gemäß den Kanalbedingungen, wobei das Verfahren umfasst:
- Empfangen (301) einer ersten Ratensteuerungsanfrage zum Einstellen einer höchsten zulässigen Sprachcoderate auf eine erste Rate eines Kernnetzwerks, gekoppelt an das Netzwerkelement;
- Senden (302) einer ersten Steuernachricht an eine mobile Station, gekoppelt an besagtes Netzwerkelement, zum Ausschalten von Sprachraten, die höher als besagte erste Rate sind;
- Starten (303) eines Zeitmessers mit einem vorbestimmten Endwert;
- Empfangen (304) einer zweiten Ratensteuerungsanfrage zum Einstellen der besagten höchsten zulässigen Sprachcoderate auf eine zweite Rate eines Kernnetzwerks, gekoppelt an das Netzwerkelement; wobei besagte zweite Rate höher als besagte erste Rate ist;
- Aussetzen (305) einer zweiten Ratensteuerungsanfrage, wenn der aktuelle Wert von besagtem Zeitmesser kleiner als besagter vorbestimmter Endwert ist;
- Empfangen einer dritten Ratensteuerungsanfrage zum Einstellen des besagten höchsten zulässigen Sprachcodes auf eine dritte Rate; wobei besagte dritte Rate niedriger als die zweite und die erste Rate ist;
- Senden einer dritten Steuernachricht an besagte mobile Station zum Deaktivieren von Sprachraten, die höher als besagte dritte Rate sind, ohne darauf zu warten, dass der Zeitmesser den vorbestimmten Endwert erreicht.

2. Verfahren nach Anspruch 1, ferner umfassend:
- Empfangen einer dritten Steuerungsanfrage zum Einstellen der Sprachrate auf eine dritte Rate, wobei die dritte Rate gleich der besagten ersten Rate ist und besagte zweite Steuerungsanfrage ausgesetzt ist;
- Nichtbeachten besagter zweiten und dritten Steuerungsanfrage.

3. Verfahren nach einem beliebigen der vorstehenden Ansprüche, wobei besagter Sprachcode AMR oder W-AMR ist; wobei besagter Zeitmesser neugestartet wird nach dem Senden einer Steuernachricht an besagte mobile Station zum Ermöglichen der besagten zweiten Rate.

4. Verfahren nach einem beliebigen der vorstehenden Ansprüche, wobei besagter aktueller Wert von besagtem Zeitmesser erhalten wird durch Zählen der empfangenen Sprachrahmen.

5. Verfahren nach einem der Ansprüche 1-3, wobei besagter aktueller Wert von besagtem Zeitmesser erhalten wird von einer Systemuhr.

6. Verfahren nach einem beliebigen der vorstehenden Ansprüche, wobei besagte Steuerungsanfragen Ratensteuerungsanfragen sind, die ausgelöst werden von einer Fern-Funkverbindung in einem tandemfreien Betrieb oder einem transcoderfreiem Betriebsszenario; wobei besagte Steuernachrichten Funkressourcen-Steuernachrichten sind; wobei besagtes mobiles Kommunikationssystem GSM oder UMTS ist.

7. Netzwerkelement in einem mobilen Kommunikationssystem, das betriebsfähig ist zum Bereitstellen einer Reduktion von Sprachratensteuersignalisierung gemäß den Kanalbedingungen, umfassend:
- Mittel zum Empfangen (104) einer ersten Ratensteuerungsanfrage zum Einstellen einer höchsten zulässigen Sprachcoderate auf eine erste Rate;
- Mittel zum Senden (105) einer ersten Steuernachricht (109) an eine mobile Station, gekoppelt an besagtes Netzwerkelement, zum Ausschalten von Sprachraten, die höher als besagte erste Rate sind;
- Mittel zum Starten (106) eines Zeitmessers mit einem vorbestimmten Endwert;
- Mittel zum Empfangen (107) einer zweiten Ratensteuerungsanfrage zum Einstellen der besagten höchsten zulässigen Sprachcoderate auf eine zweite Rate; wobei besagte zweite Rate höher als besagte erste Rate ist;
- Mittel zum Aussetzen (108) einer zweiten Ratensteuerungsanfrage, wenn ein aktueller Wert von besagtem Zeitmesser kleiner als besagter vorbestimmter Endwert ist;
- Mittel zum Empfangen einer dritten Anfrage zum Einstellen des besagten höchsten zulässigen Sprachcodes auf eine dritte Rate; wobei besagte dritte Rate niedriger als besagte zweite und besagte erste Rate ist;
- Mittel zum Senden einer dritten Steuernachricht an besagte mobile Station zum Deaktivieren von Sprachraten, die höher als besagte dritte Rate sind.

8. Netzwerkelement nach Anspruch 7, ferner umfassend:
- Mittel zum Empfangen einer dritten Ratensteuerungsanfrage zum Einstellen des besagten höchsten zulässigen Sprachcodes auf eine dritte Rate, wobei besagte dritte Rate höher als besagte zweite Rate ist;
- Mittel zum Senden einer zweiten Steuernachricht an besagte mobile Station zum Deaktivieren von Sprachraten, die höher als besagte dritte Rate sind, wenn besagter Zeitmesser besagten vorbestimmten Endwert erreicht;
- Mittel zum Neustarten von besagtem Zeitmesser an einem zweiten vorbestimmten Endwert;
- Mittel zum Aussetzen von besagter dritter Anfrage;
- Mittel zum Senden einer dritten Steuernachricht an besagte mobile Station zum Deaktivieren von Sprachraten, die höher als besagte dritte Rate sind, wenn besagter Zeitmesser besagten zweiten vorbestimmten Endwert erreicht.

9. Netzwerkelement nach Anspruch 7, ferner umfassend:
- Mittel zum Empfangen einer dritten Steuerungsanfrage zum Einstellen der besagten Sprachrate auf eine dritte Rate, wobei besagte dritte Rate gleich der besagten ersten Rate ist und besagte zweite Steuerungsanfrage ausgesetzt ist;
- Mittel zum Nichtbeachten besagter zweiten und dritten Steuerungsanfrage.

10. Netzwerkelement nach einem der Ansprüche 7 bis 9, wobei besagter Sprachcode AMR oder W-AMR ist; wobei besagter Zeitmesser neugestartet wird nach dem Senden einer Steuernachricht an besagte mobile Station zum Ermöglichen der besagten zweiten Rate.

11. Netzwerkelement nach einem beliebigen der vorstehenden Ansprüche, wobei besagtes Netzwerkelement ein Basisstations-Controller ist oder ein Funknetzwerk-Controller oder eine Basisstation oder ein B-Knoten oder ein Zugangspunkt.

12. Computerprogramm-Produkt (111), gespeichert auf einem Speichermedium, umfassend ausführbare Programm-Mittel zum Veranlassen eines Netzwerkelements zum Durchführen eines Verfahrens nach einem beliebigen der vorstehenden Ansprüche 1 bis 7, wenn das Programm auf dem Kernnetzwerk-Element ausgeführt wird.

## Revendications

1. Procédé pour fournir une réduction de signalisation de commande de vitesse vocale dans un élément de réseau d'un réseau de communications mobiles conformément à des conditions de canal, le procédé comprenant les étapes suivantes :
- recevoir (301) une première demande de commande de vitesse pour régler une vitesse de codec vocal autorisée maximum à une première vitesse à partir d'un coeur de réseau couplé à l'élément de réseau ;
- envoyer (302) un premier message de commande à une station mobile couplée audit élément de réseau pour désactiver des vitesses vocales supérieures à ladite première vitesse ;
- démarrer (303) un temporisateur avec une valeur de fin prédéterminée ;
- recevoir (304) une deuxième demande de commande de vitesse pour régler ladite vitesse de codec vocal autorisée maximum à une deuxième vitesse à partir d'un coeur de réseau couplé à l'élément de réseau ; dans lequel ladite deuxième vitesse est supérieure à ladite première vitesse ;
- mettre (305) ladite deuxième demande de commande de vitesse en attente, si une valeur actuelle dudit temporisateur est inférieure à ladite valeur de fin prédéterminée
- recevoir une troisième demande de commande de vitesse pour régler ledit codec vocal autorisé maximum à une troisième vitesse, dans lequel ladite troisième vitesse est inférieure auxdites deuxième et première vitesses ;
- envoyer un troisième message de commande à ladite station mobile pour désactiver des vitesses vocales supérieures à ladite troisième vitesse sans attendre que le temporisateur atteigne la valeur de fin prédéterminée.

2. Procédé selon la revendication 1 comprenant en outre les étapes suivantes :
- recevoir une troisième demande de commande pour régler ladite vitesse vocale à une troisième vitesse, dans lequel ladite troisième vitesse est égale à ladite première vitesse et ladite deuxième demande de commande est en attente ;
- ignorer lesdites deuxième et troisième demandes de commande.

3. Procédé selon l'une quelconque des revendications précédentes, dans lequel ledit code vocal est AMR ou W-AMR ; dans lequel ledit temporisateur est redémarré après l'envoi d'un message de commande à ladite station mobile pour activer ladite deuxième vitesse.

4. Procédé selon l'une quelconque des revendications précédentes, dans lequel ladite valeur actuelle dudit temporisateur est obtenue en comptant les trames vocales reçues.

5. Procédé selon l'une quelconque des revendications 1 à 3, dans lequel ladite valeur actuelle dudit temporisateur est obtenue à partir d'une horloge système.

6. Procédé selon l'une quelconque des revendications précédentes, dans lequel lesdites demandes de commande sont des demandes de commande de vitesse de lu déclenchées à partir d'une liaison radio distante dans un scénario de fonctionnement sans tandem ou de fonctionnement sans transcodeur ; dans lequel lesdits messages de commande sont un message de commande de ressources radio ; dans lequel ledit système de communication mobile est un GSM ou un UMTS.

7. Élément de réseau dans un système de communication mobile permettant de fournir une réduction de signalisation de commande de vitesse vocale conformément à des conditions de canal, comprenant :
- des moyens pour recevoir (104) une première demande de commande de vitesse pour régler une vitesse de codec vocal autorisée maximum à une première vitesse ;
- des moyens pour envoyer (105) un premier message de commande (109) à une station mobile couplée audit élément de réseau pour désactiver des vitesses vocales supérieures à ladite première vitesse ;
- des moyens pour démarrer (106) un temporisateur avec une valeur de fin prédéterminée ;
- des moyens pour recevoir (107) une deuxième demande de commande de vitesse pour régler ladite vitesse de codec vocal autorisée maximum à une deuxième vitesse ; dans lequel ladite deuxième vitesse est supérieure à ladite première vitesse ;
- des moyens pour mettre (108) ladite deuxième demande de commande de vitesse en attente, si une valeur actuelle dudit temporisateur est inférieure à ladite valeur de fin prédéterminée
- des moyens pour recevoir une troisième demande pour régler ledit codec vocal autorisé maximum à une troisième vitesse, dans lequel ladite troisième vitesse est inférieure auxdites deuxième et première vitesses ;
- des moyens pour envoyer un troisième message de commande à ladite station mobile pour désactiver des vitesses vocales supérieures à ladite troisième vitesse.

8. Élément de réseau selon la revendication 7 comprenant en outre :
- des moyens pour recevoir une troisième demande de commande de vitesse pour régler ledit codec vocal autorisé maximum à une troisième vitesse, dans lequel ladite troisième vitesse est supérieure à ladite deuxième vitesse ;
- des moyens pour envoyer un deuxième message de commande à ladite station mobile pour désactiver des vitesses vocales supérieures à ladite deuxième vitesse, lorsque ledit temporisateur atteint ladite valeur de fin prédéterminée ;
- des moyens pour redémarrer ledit temporisateur à une deuxième valeur de fin prédéterminée ;
- des moyens pour mettre en attente ladite troisième demande ;
- des moyens pour envoyer un troisième message de commande à ladite station mobile pour désactiver des vitesses vocales supérieures à ladite troisième vitesse, lorsque ledit temporisateur atteint ladite deuxième valeur de fin prédéterminée.

9. Élément de réseau selon la revendication 7, comprenant en outre :
- des moyens pour recevoir une troisième demande de commande pour régler ladite vitesse vocale à une troisième vitesse, dans lequel ladite troisième vitesse est égale à ladite première vitesse et ladite deuxième demande de commande est en attente ;
- des moyens pour ignorer lesdites deuxième et troisième demandes de commande.

10. Élément de réseau selon l'une quelconque des revendications 7 à 9, dans lequel ledit code vocal est AMR ou W-AMR ; dans lequel ledit temporisateur est redémarré après l'envoi d'un message de commande à ladite station mobile pour activer ladite deuxième vitesse.

11. Élément de réseau selon l'une quelconque des revendications précédentes, ledit élément de réseau étant un contrôleur de station de base, ou un contrôleur de réseau radio, ou une station de base, ou un noeud B, ou un point d'accès.

12. Produit de programme informatique (111) stocké sur un support de stockage, comprenant des moyens de programmation exécutables pour amener un élément de réseau à exécuter un procédé selon l'une quelconque des revendications précédentes 1 à 7 lorsque le programme est exécuté sur l'élément de coeur de réseau.
